# EUROPEAN PATENT APPLICATION

(11) **EP 2 133 555 A1**
(43) Date of publication of application: **16.12.2009**
(21) Application number: 08010590.1
(22) Date of filing: 11.06.2008
(51) Int. Cl.: F03B 13/20, F03B 13/22, F03D 9/00

(54) **Water elevation type wave energy converter and method of conversion of wave energy**

(71) Applicant: Molloy, Padraig, Co. Galway (IE)
(72) Inventor: Molloy, Padraig, Co. Galway (IE)
(74) Representative: Lucey, Michael

(57) **Abstract**

The present invention relates to an energy system and method suitable for converting wave energy of a body of water into movement of a drive train to capture energy comprising a vessel sitting on said body of water having a hull (1) adapted to roll freely in response to said wave energy; and a plurality of inclined channels (4) mounted within and/or on the hull (1) that are positioned to convert the rolling motion of the hull (1) to vertical displacement of water, such that said vertical displacement of water can then be allowed flow under gravity through an conversion capture system (9) to capture energy. The invention also provides a mooring system (15) suitable for connecting the vessel with an anchor, the mooring system (15) adapted to facilitate unhindered rolling motion of the vessel and maximise energy capture.

## Description

### Introduction

The invention relates to a system suitable for converting wave energy, and optionally in combination with wind energy, into the vertical displacement of water.

In particular, the invention relates to a power generation vessel suitable for converting wave energy, and optionally in combination with wind energy, into a continuous flow of water suitable to actuate a water flow capture system and thereby a drive train to generate/capture energy.

### Summary of the Invention

According to the invention there is provided, as set out in the appended claims, an energy system suitable for converting wave energy of a body of water into movement of a drive train to capture energy comprising: a vessel, sitting on said body of water, having a hull adapted to roll freely in response to said wave energy; and at least one or more inclined channels mounted within and/or on the hull that are positioned to convert the rolling motion of the hull to vertical displacement of water, such that said vertical displacement of water can then be allowed flow under gravity through an energy conversion system to capture energy. Ideally the invention provides a reservoir positioned at one or both ends of one or more of the plurality of inclined channels.

The hull and channel system is designed such that water enters through ducts located in the hull that are either continuously or intermittently immersed in water as the vessel rolls on a body of water, for example sea/lake/river/ocean etc. As the vessels rolls the water flows from reservoir to reservoir, entering each reservoir at the top and exiting at the bottom. The outflow from the last or topmost reservoir flows into a header tank from which it may be discharged under the gravity through a flow capture and energy conversion system.

Ideally the invention provides a mooring system suitable for connecting the vessel with an anchor, the mooring system adapted to facilitate unhindered the rolling motion of the vessel in the water. In other words the mooring system is adapted to minimise energy dissipation due to the rolling motion of the vessel.

In a preferred embodiment of the invention, the system comprises an anchor which is suitably fixed with respect to the vessel but allowing the vessel to roll freely. Typically, the anchor comprises a riser fixed to the sea bed and optionally fixed to the mooring system through a swivel adapted to swivel in response to the orientation of the vessel relative to the anchor. Ideally, the mooring system tethers the vessel to the anchor about two pivot or clevis type attachments located on each end of the hull at or close to the vessels longitudinal axis of rotation. In one embodiment, the mooring system is adapted to bias the hull of the vessel into an orientation where it is beam-on to the direction of the wind and/or wave and/or optimal orientation, depending on the conditions.

The energy system as claimed in any preceding claim wherein a closed loop system is provided such that the water allowed flow under gravity through the energy capture system is delivered back to lower channels of said plurality of channels for subsequent vertical displacement. The closed loop system is possible as fluid discharged from the flow capture system is fed back into the lower reservoirs and not released back into the sea/lake/river where the vessel is floating.

In another embodiment of the present invention the vessel comprises a wind capture system capable of controllably presenting a variable wind heeling load to amplify the hulls rolling motion. In this manner, the hull rolling motion is amplified to maximise the vessel rolling motion. Suitably, the wind capture system is adapted to amplify the hulls rolling motion by increasing the wind heeling load on the hull at a forward point of roll and decreasing the wind heeling load on the hull at an aft point of roll. The term "forward point of roll" should be understood to mean that position when the vessel is heeling to windward. The term "aft point of roll" should be understood to mean that position when the vessel is heeling to leeward.

Generally, the variation of the wind loading on the hull is synchronised with the rolling of the hull. Various means of providing such synchronisation can be employed, according to the present invention. Thus, in one embodiment, the wind capture system is operatively connected to the mooring system or the drive train such that the variation in captured wind heeling load on the hull is synchronised with the rolling of the hull. In one embodiment, the wind capture system comprises a system of shutters in which wind heeling load on the hull is varied by opening and closing the shutters. Typically, the system of shutters is mounted on a mast. Ideally, the vessel comprises a plurality of shutters, each suitably mounted on a separate mast. As such, when a system of shutters mounted on a mast is employed, the mast (including the shutter system) may be rotatable with respect to the vessel, or the system of shutters may be rotatable on the mast. Either way, the system of shutters may be rotated into a favourable orientation with respect to the wind direction and/or rotated in phase with the rolling motion of the waves.

Ideally, a section of a part of the hull intended to be underwater is semi-circular. However, other designs of hull which optimises the performance of the rolling motion of the hull/vessel. Suitably, the profile of the hull may be half-cylindrical.

In a particularly preferred embodiment, the invention relates to a system for converting wind and wave energy into vertical elevation of water and thence into electricity as the waters potential energy is recovered. The flow is converted to a mechanical output by conventional means and hence used to drive an electricity generator operatively connected to the drive train. Typically, the system includes electrical power transmission means for transmitting electrical power from the vessel.

The invention also relates to a vessel suitable for forming part of the power generation system of the invention and comprising a vessel having a hull shaped to roll freely in response to the action of the wind and waves, and a wind capture system capable of controllably presenting a variable wind heeling load to amplify the hulls rolling motion.

Ideally, the wind capture system comprises wind heeling load variation means to amplify the hulls rolling motion by increasing wind heeling load on the hull at a forward point of roll and decreasing wind heeling load on the hull at an leeward point of roll.

Typically, the wind capture system is operatively connected to the mooring system or the drive train such that the changes in wind heeling load on the hull are synchronised with the rolling of the hull.

In one embodiment, the wind capture system comprises a system of shutters in which wind heeling load on the hull is varied by opening and closing the shutters. Suitably, system of shutters is mounted on a mast, wherein the vessel ideally comprises a plurality of shutter systems, each mounted on a mast.

In another embodiment, the wind capture system can rotate with respect to the vessel and optionally in phase with the rolling motion of the water to accentuate rolling displacement of the water. Suitably the wind capture system can be adapted to provide a dampening mechanism depending on the rolling motion of the vessel.

The invention also relates to a method of generating electricity comprising a step of positioning an electricity generation system according to the invention in a body of water exposed to wind and wave motion, and converting the wind and wave energy into electricity.

In another embodiment there is provided a method for converting wave energy of a body of water into movement of a drive train to generate energy comprising:
adapting a vessel, sitting on said body of water, having a hull to roll freely in response to said wave energy; and
positioning at least one or more inclined channels mounted within and/or on the hull to convert the rolling motion of the hull to vertical displacement of water, such that said vertical displacement of water can then be allowed flow under
gravity through an energy conversion system to capture energy.

### Brief Description of the Drawings

The invention will be more clearly understood from the following description of some embodiment thereof, given by way of example only, with reference to the accompanying figures in which:
Figure 1 illustrates an isometric projection of a wave energy conversion system according to the present invention.
Figure 2 illustrates a projection of a wave energy conversion vessel of the present invention.
Figure 3 illustrates an isometric projection of a wave energy conversion vessel according to the present invention.
Figure 4 illustrates a projection of a wind and wave energy conversion vessel of another embodiment of the present invention.
Figure 5 illustrates an isometric projection of a wave and wind energy conversion vessel of Figure 4.
Figure 6 illustrates an isometric projection of a wave and wind energy conversion vessel of Figure 4.

### Detailed Description of the Drawings

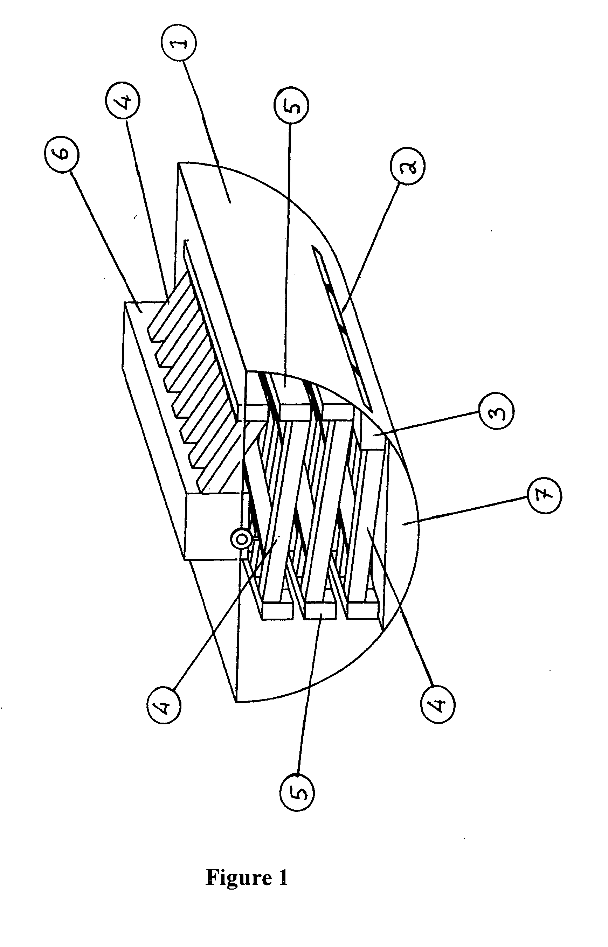

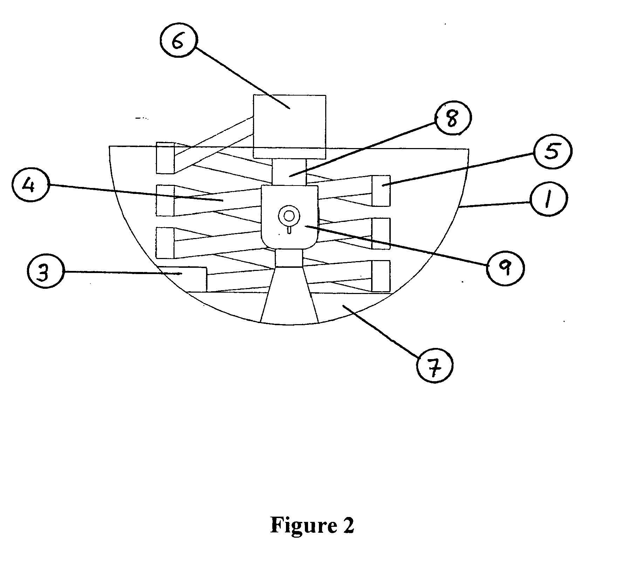

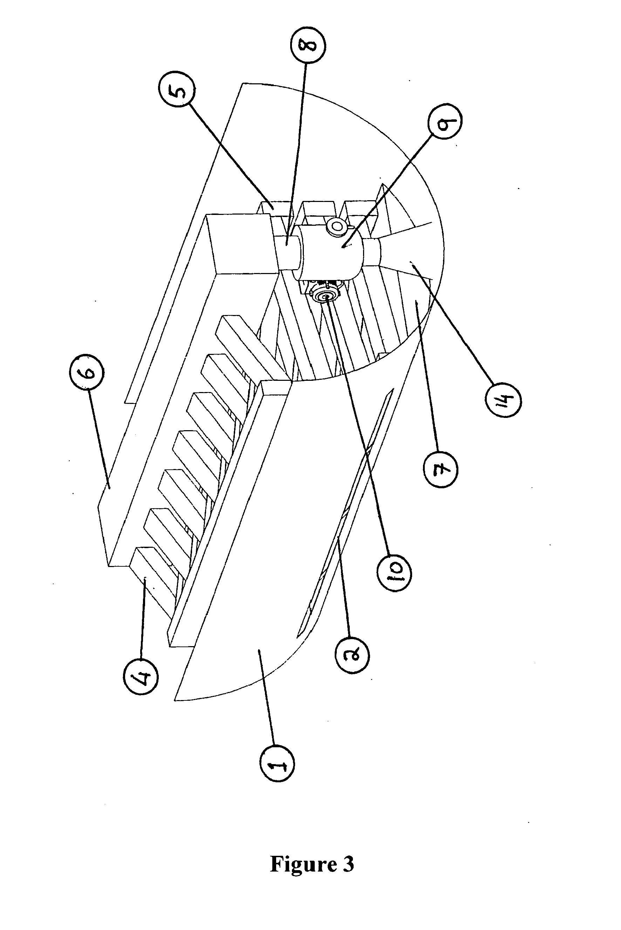

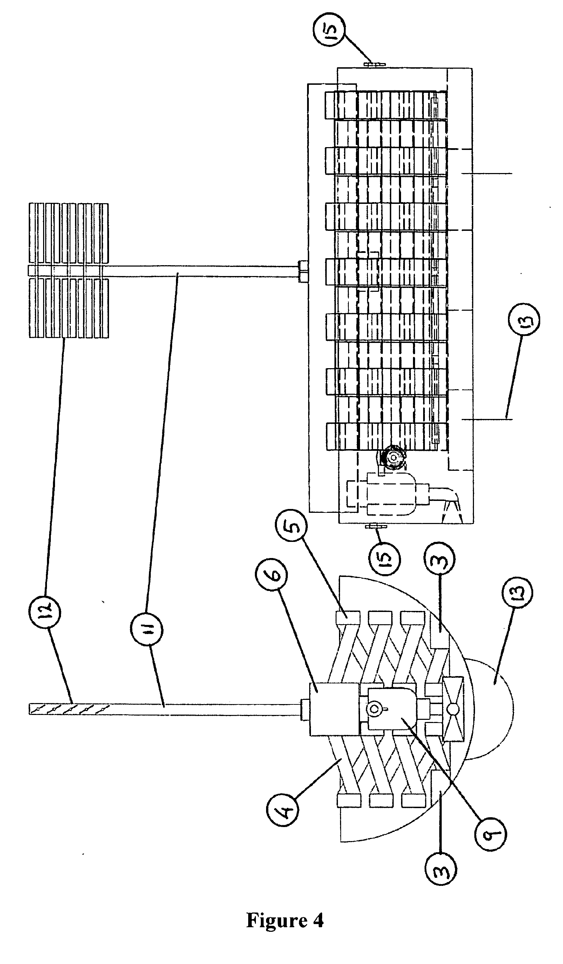

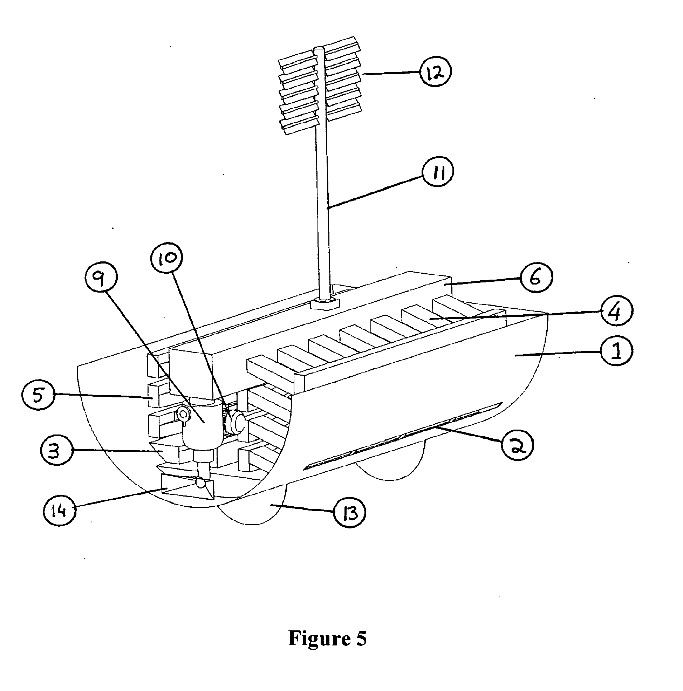

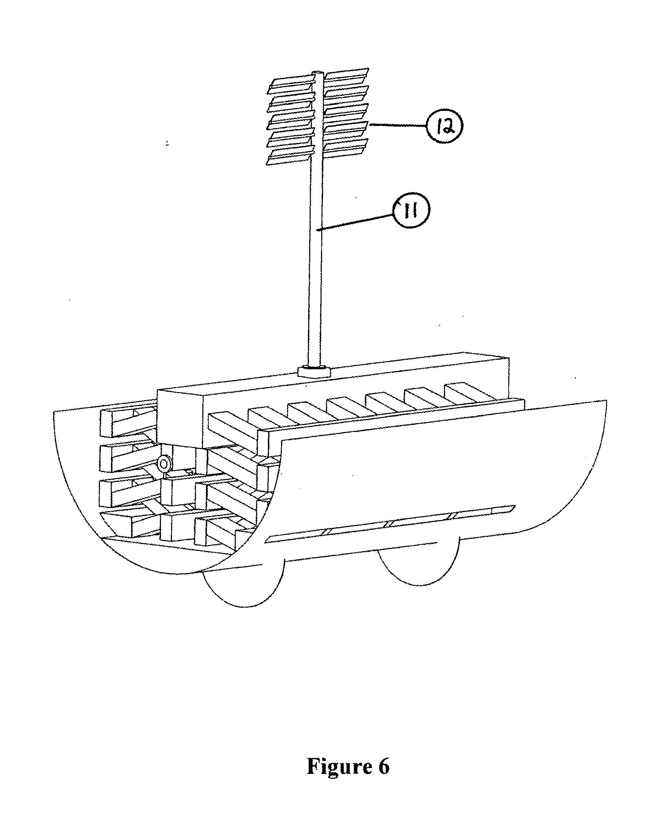

A system for the conversion of wave (and optionally wind energy) to electrical power is illustrated in attached Figures 1 to 6. As shown in Figures 1, 2 and 3 there is provided a hull (1) within which is mounted a water entry grill (2) which allows water enter the base reservoir(s) (3) in the hull. From this reservoir the water is channelled upward through a system of ducts or channels (4) and/or reservoirs (5) up to the topmost reservoir or header tank (6). The channel or channels can be of any shape or suitable to dimension to enable vertical displacement of water. As the vessel rolls to the action of waves (and/or wind) water flows through the inclined channel up to the next reservoir in the series. In each case water enters each reservoir through the top and exits at the bottom. There may be a single flow system as in Figures 1, 2 and 3 or multiple systems as in Figures 4, 5 and 6. The vessel may use an internal ballast (7) and/or external ballast (13) to balance the vessel and providing a righting moment.

Water flows from the topmost reservoir through a duct/channel (8) and hence through a turbine (9) and then through an exit duct/channel (14). In a separate embodiment the turbine outlet channel or duct or exit channel or duct can be connected to base reservoir (3) and hence operate as a closed loop system.

In the embodiment shown in Figure 4, 5 and 6 on the hull is mounted one or more masts or structures (11) on which in turn is mounted a wind capture element (12) or sail capable of rotating about the vertical axis on the mast, or is mounted on the mast a wind capture device consisting of multiple slats (mounted either horizontally or vertically) capable of being opened or closed (12) (as shown in Fig. 4, Fig 5 and Fig. 6).

The hull is designed to lie abeam of the seas and at right angles to the prevailing wind. The invention is designed such that internal (7) and external masses (13) act as counterweights to the rigs heeling influence and provide a righting moment to the vessel. The wind capture system is used to maximise the hulls rolling motion by maximising wind heeling load at the forward or windward point of roll of the vessel (into the wind/waves) and maintaining that wind loading as the vessel rolls away from the wind. The wind capture system minimises wind heeling load at the leeward or aft point of roll (vessel is rolled away from the wind) and maintains that minimised wind loading as the vessel rolls to windward. By operating the wind capture system in phase with rolling motion caused by wave action on the hull of the vessel, the vessel's angle of roll is thereby amplified. The energy released by the wind and waves causing the rolling motion of the vessel are captured by water elevator system shown. The attachment points for the vessels mooring system (15) sit on or close to the vessels axis of rotation and the anchor system is secured to the vessel at these clevis type attachment points thereby leaving the vessel roll unrestricted.

In a separate embodiment the vessels vertical motion, rise and fall, are captured by the vessel's mooring system and an associated onboard drive train. This is particularly suitable for conditions where there is a large rolling motion or high amplitude in the rolling motion to further capture energy as the vessel rises and falls.

It will be appreciated that in the context of the present invention that the terms channel and duct should be afforded the widest possible interpretation, so long as the channel or duct conveys the water to facilitate vertical displacement of water. Moreover it is envisaged that the invention will operate with any type of fluid and the term water sued in the description and claims should be interpreted broadly as to mean any body of fluid.

It will be further appreciated that the channels or ducts are inclined at any suitable angle depending on the size of the vessel and length of the channels to allow for the vertical displacement of water. The reservoirs associated with each channel can be dimensioned to maximise the upward displacement of water relative to the body of water that the vessel is sitting on. Typically the channel or duct of the present invention can be of any shape or dimension, for example a slide inclined relative to surface of the body of water, when flat, and provided with a suitable geometry to enable vertical displacement of water.

The invention is not limited to the embodiments hereinbefore described but may be varied in both construction and detail.

| **Item** | **No.** |
|---|---|
| Hull | 1 |
| Water entry grill | 2 |
| Entry or base reservoir | 3 |
| Water flow channels/ducts | 4 |
| Intermediate reservoirs | 5 |
| Final reservoir/header tank | 6 |
| Internal ballast/counterweight | 7 |
| Turbine duct/channel | 8 |
| Turbine | 9 |
| Generator | 10 |
| Mast | 11 |
| Horizontal Axis Rotational Wind Capture Element | 12 |
| External counterweight/keel | 13 |
| Turbine Exit duct/channel | 14 |
| Mooring attachment structures | 15 |

## Claims

1. An energy system suitable for converting wave energy of a body of water into movement of a drive train to capture energy comprising:
a vessel, sitting on said body of water, having a hull adapted to roll freely in response to said wave energy; and
at least one or more inclined channels mounted within and/or on the hull that are positioned to convert the rolling motion of the hull to vertical displacement of water, such that said vertical displacement of water can then be allowed flow under gravity through an energy conversion system to capture energy.

2. The energy system of claim 1 comprising a reservoir positioned at one or both ends of one or more of the plurality of inclined channels.

3. The energy system of any preceding claim comprising a mooring system suitable for connecting the vessel with an anchor, the mooring system adapted to minimise energy dissipation due to the rolling motion of the vessel in the water.

4. The energy system as claimed in claim 3 wherein the anchor comprises a riser fixed to the ground and optionally fixed to the mooring system through a swivel adapted to swivel in response to the orientation of the vessel relative to the anchor.

5. The energy system as claimed in claim 3 or 4 wherein the mooring system tethers the vessel to the anchor about two pivot or clevis type attachments located on each end of the hull at or close to the vessels longitudinal axis of rotation.

6. The energy system as claimed in any of claims 3, 4 or 5 wherein the mooring system is adapted to bias the hull of the vessel into an orientation where it is beam-on to the direction of any wind and/or wave and/or optimal orientation.

7. The energy system as claimed in any preceding claim wherein a closed loop system is provided such that the water allowed flow under gravity through the energy capture system is delivered back to lower channels of said plurality of channels for subsequent vertical displacement.

8. The energy system of any preceding claim wherein the vessel comprises a wind capture system capable of controllably presenting a variable wind heeling load to amplify the hulls rolling motion.

9. The energy system as claimed in claim 8 wherein the wind capture system is adapted to amplify the hulls rolling motion by increasing the wind heeling load on the hull at a forward point of roll and decreasing the wind heeling load on the hull at an aft point of roll.

10. The energy system as claimed in claims 8 or 9 wherein said wind capture system comprises means to vary the wind loading on the vessel to synchronise with the rolling motion of the vessel.

11. The energy system of any of claims 8 to 10 wherein the wind capture system is operatively connected to the mooring system or the drive train such that the variation in captured wind heeling load on the hull is synchronised with the rolling of the hull

12. The energy system of any of claims 8 to 11 wherein the wind capture system comprises a system of shutters in which wind heeling load on the hull is varied by opening and closing the shutters.

13. The energy system of claim 12 wherein the system of shutters may be rotated into a favourable orientation with respect to the wind direction and/or rotated in phase with the rolling motion of the vessel.

14. The energy system of any of claims 8 to 13 wherein the wind capture system comprises wind heeling load variation means to amplify the hulls rolling motion by increasing wind heeling load on the hull at a forward point of roll and decreasing wind heeling load on the hull at a leeward point of roll.

15. A method for converting wave energy of a body of water into movement of a drive train to capture energy comprising:
adapting a vessel, sitting on said body of water, having a hull to roll freely in response to said wave energy; and
positioning at least one or more inclined channels mounted within and/or on the hull to convert the rolling motion of the hull to vertical displacement of water, such that said vertical displacement of water can then be allowed flow under gravity through an energy conversion system to capture energy.
